# EUROPEAN PATENT APPLICATION

(11) **EP 4 510 732 A1**
(43) Date of publication of application: **19.02.2025**
(21) Application number: 22936922.8
(22) Date of filing: 14.04.2022
(51) Int. Cl.: H04W 72/04, H04W 72/00

(54) **RESOURCE CONFIGURATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Stöckeler, Ferdinand
(86) International application number: PCT/CN2022/086930
(87) International publication number: WO 2023/197274

(57) **Abstract**

Provided in the embodiments of the present invention is a resource configuration method. The method is executed by an access network device. The method comprises: sending, to a first-type terminal, downlink control channel common configuration information which is configured for an initial bandwidth part (BWP), wherein the downlink control channel common configuration information is used for indicating a predetermined resource for the first-type terminal to execute a predetermined operation, and the predetermined resource comprises at least one of the following: an additional common control resource set CORESET, an additional common search space, a common control resource set CORESET0 and a common search space 0.

## Description

### FIELD

The present invention relates to the field of wireless communication technologies but is not limited to the field of wireless communication technologies, and in particular relates to a method and an apparatus for configuring a resource, a communication device and a storage medium.

### BACKGROUND

In a process of continuous evolution of networks, new terminals, i.e. reduced capability (Redcap) terminals, are introduced. Such terminals differ from ordinary terminals, e.g. from enhanced mobile broadband (eMBB) terminals. Such terminals generally need to meet the following requirements: 1. low cost and low complexity; 2. a certain degree of coverage enhancement; 3. power saving.

In the related art, a bandwidth part (BWP) is defined. With the introduction of the RedCap terminals, how to use the BWP for the RedCap terminals is an issue that needs to be considered.

### SUMMARY

The present invention provides a method and an apparatus for configuring a resource, a communication device and a storage medium.

According to a first aspect of embodiments of the present invention, there is provided a method for configuring a resource, performed by an access network device, including: sending common configuration information of a downlink control channel for an initial bandwidth part (BWP) configuration; in which the common configuration information of the downlink control channel is used to indicate a predetermined resource for a first-type terminal to perform a predetermined operation; the predetermined resource includes at least one of: an additional common control resource set (CORESET); an additional common search space; a common CORESETO; or a common search space 0.

In an embodiment, the predetermined operation includes at least one of: an operation of random access response (RAR) monitoring; an operation of paging monitoring; or an operation of system message monitoring.

In an embodiment, an identifier of the additional common CORESET is different from or the same as an identifier of the common CORESET configured for a second-type terminal; and/or an identifier of the additional common search space is different from or the same as an identifier of a common search space configured for the second-type terminal.

In an embodiment, a bandwidth of the additional common CORESET is not contained in a bandwidth of the CORESETO in response to that a bandwidth of an initial BWP does not contain the bandwidth of the CORESETO.

In an embodiment, the method includes at least one of: the additional common CORESET being configured as a CORESET associated with a common search space for the first-type terminal to perform the predetermined operation; the additional common search space being configured as a common search space for the first-type terminal to perform the predetermined operation; the CORESETO being configured as a CORESET associated with a common search space for the first-type terminal to perform the predetermined operation; or the common search space 0 being configured as a common search space for the first-type terminal to perform the predetermined operation.

In an embodiment, the predetermined resource further includes a resource configured for a second-type terminal in a predetermined message; the predetermined message includes at least one of: a master information block (MIB) or a system information block 1 (SIB1); the resource configured for the second-type terminal includes at least one of a resource for paging monitoring, a resource for system message monitoring or a resource for RAR monitoring; and the resource configured for the second-type terminal is configured as the common search space for the first-type terminal to perform the predetermined operation.

In an embodiment, the method includes at least one of: a CORESET associated with a search space for paging monitoring configured for the second-type terminal being configured as a CORESET associated with a search space for paging monitoring for the first-type terminal; a CORESET associated with a search space for system message monitoring configured for the second-type terminal being configured as a CORESET associated with a search space for system message monitoring for the first-type terminal; a search space for paging monitoring configured for the second-type terminal being configured as a search space for paging monitoring for the first-type terminal; or a search space for system message monitoring configured for the second-type terminal being configured as a search space for system message monitoring for the first-type terminal.

In an embodiment, the method includes at least one of: the additional common CORESET being configured as a CORESET associated with a search space for RAR monitoring for the first-type terminal; the common CORESETO being configured as a CORESET associated with a search space for RAR monitoring for the first-type terminal; the additional common search space being configured as a search space for RAR monitoring for the first-type terminal; or the common search space 0 being configured as a search space for RAR monitoring for the first-type terminal.

According to a second aspect of embodiments of the present invention, there is provided a method for configuring a resource, performed by a first-type terminal, including: receiving common configuration information of a downlink control channel configured for an initial bandwidth part (BWP) sent by an access network device to the first-type terminal; in which the common configuration information of the downlink control channel is used to indicate a predetermined resource for the first-type terminal to perform a predetermined operation; the predetermined resource includes at least one of: an additional common control resource set (CORESET); an additional common search space; a common CORESETO; or a common search space 0.

In an embodiment, the predetermined operation includes at least one of: an operation of random access response (RAR) monitoring; an operation of paging monitoring; or an operation of system message monitoring.

In an embodiment, an identifier of the additional common CORESET is different from or the same as an identifier of a common CORESET configured for a second-type terminal; and/or an identifier of the additional common search space is different from or the same as an identifier of a common search space configured for the second-type terminal.

In an embodiment, a bandwidth of the additional common CORESET is not contained in a bandwidth of the CORESETO in response to that a bandwidth of an initial BWP does not contain the bandwidth of the CORESETO.

In an embodiment, the method includes at least one of: the additional common CORESET being configured as a CORESET associated with a common search space for the first-type terminal to perform the predetermined operation; the additional common search space being configured as a common search space for the first-type terminal to perform the predetermined operation; the CORESETO being configured as a CORESET associated with a common search space for the first-type terminal to perform the predetermined operation; or the common search space 0 being configured as a common search space for the first-type terminal to perform the predetermined operation.

In an embodiment, the predetermined resource further includes a resource configured for a second-type terminal in a predetermined message; the predetermined message includes at least one of: a master information block (MIB) or a system information block 1 (SIB1); the resource configured for the second-type terminal includes at least one of a resource for paging monitoring, a resource for system message monitoring or a resource for RAR monitoring; and the resource configured for the second-type terminal is configured as the common search space for the first-type terminal to perform the predetermined operation.

In an embodiment, the method includes at least one of: a CORESET associated with a search space for paging monitoring configured for the second-type terminal being configured as a CORESET associated with a search space for paging monitoring for the first-type terminal; a CORESET associated with a search space for system message monitoring configured for the second-type terminal being configured as a CORESET associated with a search space for system message monitoring for the first-type terminal; a search space for paging monitoring configured for the second-type terminal being configured as a search space for paging monitoring for the first-type terminal; or a search space for system message monitoring configured for the second-type terminal being configured as a search space for system message monitoring for the first-type terminal.

In an embodiment, the method includes at least one of: the additional common CORESET being configured as a CORESET associated with a search space for RAR monitoring for the first-type terminal; the common CORESETO being configured as a CORESET associated with a search space for RAR monitoring for the first-type terminal; the additional common search space being configured as a search space for RAR monitoring for the first-type terminal; or the common search space 0 being configured as a search space for RAR monitoring for the first-type terminal.

According to a third aspect of embodiments of the present invention, there is provided an apparatus for configuring a resource, including: a sending module configured to send common configuration information of a downlink control channel configured for an initial bandwidth part (BWP) to a first-type terminal; in which the common configuration information of the downlink control channel is used to indicate a predetermined resource for the first-type terminal to perform a predetermined operation; the predetermined resource includes at least one of: an additional common control resource set (CORESET); an additional common search space; a common CORESETO; or a common search space 0.

According to a fourth aspect of embodiments of the present invention, there is provided an apparatus for configuring a resource, including: a receiving module configured to receive common configuration information of a downlink control channel configured for an initial bandwidth part (BWP) sent by an access network device to a first-type terminal; in which the common configuration information of the downlink control channel is used to indicate a predetermined resource for the first-type terminal to perform a predetermined operation; the predetermined resource includes at least one of: an additional common control resource set (CORESET); an additional common search space; a common CORESETO; or a common search space 0.

According to a fifth aspect of embodiments of the present invention, there is provided a communication device, including: a processor; and a memory for storing computer-executable instructions; in which the processor is configured to execute the computer-executable instructions to cause the method in any one of embodiments of the present invention to be implemented.

According to a sixth aspect of embodiments of the present invention, there is provided a computer storage medium having stored therein computer-executable programs that, when executed by a processor, cause the method in any one of embodiments of the present invention to be implemented.

In an embodiment of the present invention, the common configuration information of the downlink control channel for the initial BWP configuration is sent to the first-type terminal; where the common configuration information of the downlink control channel is used to indicate the predetermined resource for the first-type terminal to perform the predetermined operation; the predetermined resource includes at least one of: the additional common CORESET; the additional common search space; the common CORESETO; and the common search space 0. In this way, after receiving the common configuration information of the downlink control channel for the initial BWP configuration sent by the access network device, the first-type terminal may perform the predetermined operation based on the predetermined resource indicated by the common configuration information of the downlink control channel, so that the first-type terminal may efficiently and reliably utilize a resource of the BWP, compared with a method of not configuring the common configuration information of the downlink control channel for the initial BWP.

### BRIEF DESCRIPTION OF THE DRAWINGS

FIG. 1 is a schematic diagram illustrating a wireless communication system according to an illustrative embodiment.
FIG. 2 is a schematic flowchart illustrating a method for configuring a resource according to an illustrative embodiment.
FIG. 3 is a schematic flowchart illustrating a method for configuring a resource according to an illustrative embodiment.
FIG. 4 is a schematic flowchart illustrating a method for configuring a resource according to an illustrative embodiment.
FIG. 5 is a schematic flowchart illustrating a method for configuring a resource according to an illustrative embodiment.
FIG. 6 is a schematic flowchart illustrating a method for configuring a resource according to an illustrative embodiment.
FIG. 7 is a schematic flowchart illustrating a method for configuring a resource according to an illustrative embodiment.
FIG. 8 is a schematic block diagram illustrating an apparatus for configuring a resource according to an illustrative embodiment.
FIG. 9 is a schematic block diagram illustrating an apparatus for configuring a resource according to an illustrative embodiment.
FIG. 10 is a schematic block diagram illustrating a terminal according to an illustrative embodiment.
FIG. 11 is a block diagram illustrating a base station according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

Terms used herein in embodiments of the present invention are only for the purpose of describing specific embodiments, but should not be construed to limit the present invention. As used in the embodiments of the present invention and the appended claims, "a/an" and "the" in singular forms are intended to include plural forms, unless clearly indicated in the context otherwise. It should also be understood that, the term "and/or" used herein represents and contains any or all possible combinations of one or more associated listed items.

It should be understood that, although terms such as "first," "second" and "third" may be used in embodiments of the present invention for describing various information, these information should not be limited by these terms. These terms are only used for distinguishing information of the same type from each other. For example, first information may also be referred to as second information, and similarly, the second information may also be referred to as the first information, without departing from the scope of embodiments of the present invention. As used herein, the term "if" may be construed to mean "when" or "upon" or "in response to determining" depending on the context.

For purpose of brevity and ease of understanding, the terms "greater than" or "less than" are used herein when characterizing size relationships. However, those skilled in the art can understand that: the term "greater than" also encompasses a meaning of "greater than or equal to", and "less than" also encompasses a meaning of "less than or equal to".

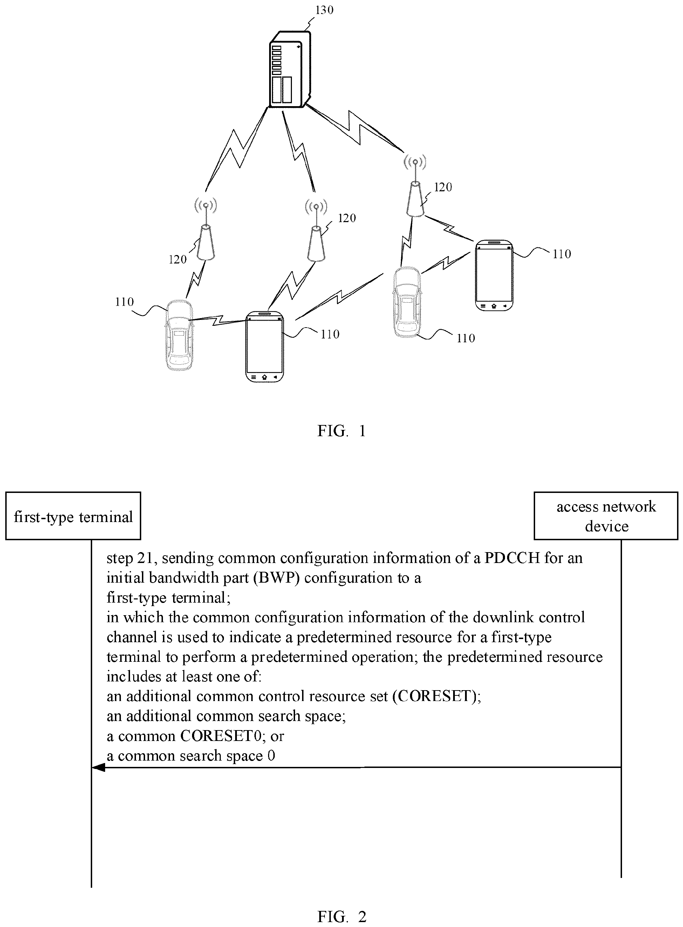

Referring to FIG. 1, which is a schematic diagram showing a wireless communication system provided by an embodiment of the present invention. As shown in FIG. 1, the wireless communication system is a communication system based on a mobile communication technology, and may include several UEs 110 and several base stations 120.

The user equipment 110 may be a device that provides voice and/or data connectivity to a user. The user equipment 110 can communicate with one or more core networks via a radio access network (RAN). The user equipment 110 can be an Internet of Things terminal, such as a sensor device, a mobile phone and a computer with an Internet of Things terminal. For example, it can be a fixed, portable, pocket-sized, handheld, built-in computer or vehicle-mounted apparatus. For example, a station (STA), a subscriber unit, a subscriber station, a mobile station, a mobile, a remote station, an access point, a remote terminal, an access terminal, a user terminal, a user agent, a user device, or a user equipment (UE). Alternatively, the user equipment 110 may be a device of an unmanned aerial vehicle. Alternatively, the user equipment 110 may be a vehicle-mounted device, for example, a driving computer with a wireless communication function, or a wireless user equipment externally connected with a driving computer. Alternatively, the user equipment 110 may be a roadside device, such as a street lamp, a signal lamp or other roadside devices with a wireless communication function.

The base station 120 may be a network side device in the wireless communication system. The wireless communication system can be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system can be referred to as a new generation-radio access network (NG-RAN).

The base station 120 may be an evolved base station (eNB) used in the 4G system. Alternatively, the base station 120 may be a centralized distributed architecture base station (gNB) used in the 5G system. When the base station 120 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the base station 120 is not limited in the embodiments of the present invention.

A wireless connection can be established between the base station 120 and the user equipment 110 through a wireless radio. In different embodiments, the wireless radio is a wireless radio based on the 4th generation mobile communication network technology (4G) standard. Alternatively, the wireless radio is a wireless radio based on the 5th generation mobile communication network technology (5G) standard. For example, the wireless radio is a new radio. Alternatively, the wireless radio can also be a wireless radio based on the next generation mobile communication network technology standard of the 5G.

In some embodiments, an end to end (E2E) connection may also be established between the user equipments 110, for example, a vehicle to vehicle (V2V) communication, a vehicle to infrastructure (V2I) communication and a vehicle to pedestrian (V2P) communication in a vehicle to everything (V2X) communication.

Here, the user equipment described above may be regarded as the terminal equipment in the following embodiments.

In some embodiments, the wireless communication system may further include a network management device 130.

Several base stations 120 are connected to the network management device 130, respectively. The network management device 130 may be a core network device in the wireless communication system, for example, the network management device 130 may be a mobility management entity (MME) in an evolved packet core (EPC). Alternatively, the network management device may be other core network devices, such as a serving gateway (SGW), a public data network gateway (PGW), a policy and charging rules function (PCRF) or a home subscriber server (HSS). The implementation form of the network management device 130 is not limited in the embodiment of the present invention.

In order to facilitate the understanding by those skilled in the art, multiple implementations are listed in embodiments of the present invention to clearly explain the technical solutions of embodiments of the present invention. Of course, those skilled in the art can understand that the multiple implementations provided in embodiments of the present invention may be executed alone, may be executed together with the methods of other implementations in embodiments of the present invention, or may be executed alone or in combination and then executed together with some methods in other related technologies, which are not limited in embodiments of the present invention.

In order to better understand technical solutions described in any embodiment of the present invention, first, application scenarios in related technologies are described.

In a fourth generation mobile communication technology (4G) system, in order to support Internet of Things services, two major technologies, machine type communication (MTC) and narrow band Internet of things (NB-IoT) are proposed.

These two technologies are mainly aimed at scenarios such as low speed and high latency, for example, meter reading, environmental monitoring and other scenarios. In an embodiment, the NB-IoT can only support rates of a few hundred k at maximum, and the MTC can only support rates of a few M at maximum. However, with continuous development of IoT services, for example, popularization of video surveillance, smart homes, wearable devices, and industrial sensor monitoring, these services usually require rates of tens to 100M, and also have relatively high requirements for the latency. Therefore, it is difficult for the MTC and NB-IoT technologies in the fourth generation mobile communication technology to meet the requirements. Based on this situation, the design of a new-type terminal in a new radio of fifth generation mobile communication technology (5G) is proposed to meet requirements of this mid-range IoT device.

In an embodiment, this new-type terminal is called a RedCap (reduced capability UE) or NR-lite for short. Here, the RedCap based on 5G NR-lite usually needs to meet the following requirements: low cost and low complexity; a degree of coverage enhancement; and power saving.

Since the 5G new radio is designed for high-end terminals such as high speed and low latency, the related design cannot meet the above requirements of the NR-lite. A new radio (NR) system needs to be modified to meet the requirements of the NR-lite. In an embodiment, in order to meet the requirements of low cost, low complexity, and the like, the radio frequency bandwidth of the NR-IoT may be limited, for example, to 20 MHz. In an embodiment, a size of buffer of the NR-lite may be limited, thereby limiting a size of each received transport block, etc. In an embodiment, for power saving, a possible optimization direction is to simplify a communication flow, reduce a number of times a NR-lite user detects a downlink control channel, and the like.

In an embodiment, an information unit (IE) field (PDCCH-ConfigCommon) is used to configure cell-specific PDCCH (physical downlink control channel) parameters provided in a SIB (system information block) and a dedicated signaling.

In an embodiment, a commonControlResourceSet is an additional set of common control resources that may be configured and used in any common or terminal-specific search space. In a case where a network is configured with this field, it uses a non-0 ControlResourceSetId for this ControlResourceSet. The network is configured with the commonControlResourceSet in a SIB1 to be included in a bandwidth of a control resource set (CORESET#0).

In an embodiment, parameters of the common CORESET#0 may be used for any common or terminal-specific search space.

After the introduction of a Redcap terminal, a downlink initial BWP (bandwidth part) for RAR (random access response) may be configured separately for the Redcap terminal in the SIB1. The initial BWP may also be an initial BWP used for paging. There is no definition as to how to configure a common search space on this initial BWP.

As shown in FIG. 2, the present embodiment provides a method for configuring a resource, performed by an access network device, including the following step.

In step 21, common configuration information of a PDCCH for an initial bandwidth part (BWP) configuration is sent to a first-type terminal; in which the common configuration information of the downlink control channel is used to indicate a predetermined resource for a first-type terminal to perform a predetermined operation; the predetermined resource includes at least one of: an additional common control resource set (CORESET); an additional common search space; a common CORESETO; or a common search space 0.

Here, the first-type terminal and a second-type terminal according to the present invention may be, but are not limited to, a mobile phone, a wearable device, an in-vehicle terminal, a road side unit (RSU), a smart home terminal, an industrial sensing device, and/or a medical device. The first-type terminal and the second-type terminal are different types of terminals. In an embodiment, the first-type terminal may be a Redcap terminal, and the second-type terminal may be another non-Redcap terminal other than the Redcap terminal.

The access network device according to the present invention may be a base station. Here, the base station may be a base station of various types, for example, a base station in a fifth generation mobile communication (5G) network or other evolved base stations.

In an embodiment, a downlink initial BWP is configured for the first-type terminal, and common configuration information of a PDCCH for the initial BWP configuration is sent to the first-type terminal; in which the common configuration information of the downlink control channel is used to indicate the predetermined resource for the first-type terminal to perform the predetermined operation; and the predetermined resource includes at least one of: the additional common control resource set (CORESET); the additional common search space; the common CORESETO; or the common search space 0.

It should be noted that the common configuration information of the PDCCH may be carried in a PDCCH common configuration (PDCCH-configCommon) field or a PDCCH common system information block configuration (PDCCH-configCommonSIB) field of a RedCap-specific initial downlink (DL) BWP configuration.

It should be noted that information such as frequency domain resource information of the PDCCH, a number of orthogonal frequency division multiplexing (OFDM) symbols occupied in a time domain and other information are encapsulated in the CORESET; a PDCCH starting OFDM symbol, a monitoring period, an associated CORESET and other information are encapsulated in a search space. Here, the common search space is mainly used during the access and cell switching, for example, for monitoring related control information, such as a broadcast control channel (BCCH), paging, RAR, etc. Related messages such as the RAR are messages for the random access response, including msg2, msg4, msgB and the like.

In an embodiment, the common configuration information of the PDCCH for the initial BWP configuration is sent to the first-type terminal; in which the common configuration information of the downlink control channel is used to indicate the predetermined resource for the first-type terminal to perform the predetermined operation; and the predetermined resource includes at least one of: the additional common control resource set (CORESET); the additional common search space; the common CORESETO; or the common search space 0. The predetermined operation includes at least one of: an operation of random access response (RAR) monitoring; an operation of paging monitoring; or an operation of system message monitoring.

In an embodiment, an identifier of the additional common CORESET is different from an identifier of the common CORESET configured for the second-type terminal. It should be noted that the identifier of the additional common CORESET may not be 0.

In an embodiment, an identifier of the additional common search space is different from an identifier of the common search space configured for the second-type terminal. It should be noted that the identifier of the additional common search space may not be 0.

In an embodiment, the identifier of the additional common CORESET is the same as the identifier of the common CORESET configured for the second-type terminal. It should be noted that the identifier of the additional common CORESET may not be 0.

In an embodiment, the identifier of the additional common search space is the same as the identifier of the common search space configured for the second-type terminal. It should be noted that the identifier of the additional common search space may not be 0.

In an embodiment, in a case where a bandwidth of an initial BWP does not contain a bandwidth of the CORSETO, the additional common CORESET or the additional common search space may be configured; in which a bandwidth of the additional common CORESET does not have to be contained in a range of the bandwidth of the CORESETO.

In an embodiment, a CORESET associated with all or some of the common search spaces for the first-type terminal may be configured based on the additional common CORESET. Alternatively, all or some of the common search spaces for the first-type terminal may be configured based on the additional common search space.

It should be noted that the CORESET associated with all the search space may be understood as a CORESET associated with the search space required for the terminal to perform all the predetermined operations, and all the predetermined operations may include the operation of RAR monitoring, the operation of paging monitoring, the operation of system message monitoring and the like, but are not limited to the above-described operations. The CORESET associated with some of the search spaces may be understood as a CORESET associated with the search space required to perform some of the predetermined operations, and the some of the predetermined operations is a part of all the predetermined operations. Similarly, all the search space here may be understood as a search space required for the terminal to perform all the predetermined operations, and all the predetermined operations may include the operation of RAR monitoring, the operation of paging monitoring, the operation of system message monitoring and the like, but are not limited to the above-described operations. The some of the search spaces may be understood as search spaces required for performing some of the predetermined operations, and the some of the predetermined operations is a part of all the predetermined operations.

In an embodiment, the additional common CORESET is configured as the CORESET associated with the common search space for the first-type terminal to perform all the predetermined operations; in which the predetermined operations include at least one of: the operation of RAR monitoring; the operation of paging monitoring; or the operation of system message monitoring.

In an embodiment, the additional common search space is configured as a common search space for the first-type terminal to perform all the predetermined operations; in which the predetermined operations include at least one of: the operation of RAR monitoring; the operation of paging monitoring; or the operation of system message monitoring.

In an embodiment, the common configuration information of the PDCCH for the initial BWP configuration is sent to the first-type terminal; in which the common configuration information of the downlink control channel is used to indicate the predetermined resource for the first-type terminal to perform the predetermined operation; and the predetermined resource includes at least one of: an additional common CORESET; or an additional common search space. The additional common CORESET is configured as a CORESET associated with the common search space for the first-type terminal to perform all the predetermined operations, and/or the additional common search space is configured as a common search space for the first-type terminal to perform all the predetermined operations.

In an embodiment, the common CORESETO is configured as a CORESET associated with the common search space for the first-type terminal to perform all the predetermined operations, in which the predetermined operations include at least one of: the operation of RAR monitoring; the operation of paging monitoring; or the operation of system message monitoring.

In an embodiment, the common CORESETO may be used by the search spaces configured on the initial BWP configured for the first-type terminal and the initial BWP configured for the second-type terminal.

In an embodiment, the common CORESETO may be used by the search spaces configured on the initial BWP configured for the first-type terminal and the initial BWP configured for the second-type terminal. The range of the bandwidth of the initial BWP configured for the first-type terminal does not contain the bandwidth of the common CORESETO.

In an embodiment, the common search space 0 is configured as a common search space for the first-type terminal to perform all the predetermined operations, in which the predetermined operations include at least one of: the operation of RAR monitoring; the operation of paging monitoring; or the operation of system message monitoring.

In an embodiment, the common configuration information of the PDCCH for the initial BWP configuration is sent to the first-type terminal; in which the common configuration information of the downlink control channel is used to indicate the predetermined resource for the first-type terminal to perform the predetermined operation; and the predetermined resource includes at least one of: a common CORESETO; or a common search space 0. The common CORESETO is configured as a CORESET associated with the common search space for the first-type terminal to perform all the predetermined operations, and/or the common search space 0 is configured as a common search space for the first-type terminal to perform all the predetermined operations.

In an embodiment, the common search space 0 may be used by search spaces configured on the initial BWP configured for the first-type terminal and the initial BWP configured for the second-type terminal.

In an embodiment, the common search space 0 may be used by search spaces configured on the initial BWP configured for the first-type terminal and the initial BWP configured for the second-type terminal. The range of the bandwidth of the initial BWP configured for the first-type terminal does not contain the bandwidth of the common CORESETO.

In an embodiment, the additional common CORESET is configured as a CORESET associated with the common search space for the first-type terminal to perform the predetermined operation; and/or the additional common search space is configured as a common search space for the first-type terminal to perform the predetermined operation; and/or the CORESETO is configured as a CORESET associated with the common search space for the first-type terminal to perform the predetermined operation; and/or the common search space 0 is configured as a common search space for the first-type terminal to perform the predetermined operation.

In an embodiment, the additional common CORESET is configured as a CORESET associated with the common search space for the first-type terminal to perform some of the predetermined operations; and/or the additional common search space is configured as a common search space for the first-type terminal to perform some of the predetermined operations; and/or the CORESETO is configured as a CORESET associated with the common search space for the first-type terminal to perform some of the predetermined operations; and/or the common search space 0 is configured as a common search space for the first-type terminal to perform some of the predetermined operations. The predetermined operations include at least one of: the operation of RAR monitoring; the operation of paging monitoring; or the operation of system message monitoring.

In an embodiment, the common configuration information of the PDCCH for the initial BWP configuration is sent to the first-type terminal; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. The additional common CORESET is configured as a CORESET associated with the common search space for the first-type terminal to perform some of the predetermined operations; and/or the additional common search space is configured as a common search space for the first-type terminal to perform some of the predetermined operations; and/or the CORESETO is configured as a CORESET associated with the common search space for the first-type terminal to perform some of the predetermined operations; and/or the common search space 0 is configured as a common search space for the first-type terminal to perform some of the predetermined operations.

It should be noted that the CORESETO and the search space 0 may be configured in a master information block (MIB), and other CORESETs and/or search spaces identified as non-0 need to be configured in the SIB1. For example, a CORESET1 and/or a search space 1 are configured in the SIB1.

In an embodiment, the predetermined resource further includes a resource configured for the second-type terminal in a predetermined message; the predetermined message includes at least one of: an MIB or an SIB1; the resource configured for the second-type terminal includes at least one of a resource for the paging monitoring, a resource for the system message monitoring or a resource for the RAR monitoring; and the resource configured for the second-type terminal is configured as the common search space for the first-type terminal to perform the predetermined operation.

In an embodiment, the CORESETO and/or the search space 0 are configured for the second-type terminal in the MIB; an additional common CORESET x and/or an additional search space CORESET x are configured for the second-type terminal in the SIB 1, where x is not 0, but may be 1, 2, or the like.

In an embodiment, the CORESETO and/or the search space 0 are configured for the second-type terminal in the MIB for monitoring of the SIB1; the CORESET x and/or the search space CORESET x are configured for the second-type terminal in the SIB 1, where x is not 0, but may be 1, 2, or the like. Other system information (SI) monitoring, or the paging monitoring, or the RAR monitoring may be associated with the CORESETO and/or the search space 0, or the CORESET x and/or the search space CORESET x configured for the second-type terminal in the MIB. That is, the configuration of the COREST and the search space may be associated with the configuration of the CORESETO and/or the search space 0 or the additional common CORESET and/or the additional search space in the MIB.

In an embodiment, a CORESET associated with the search space for the paging monitoring configured for the second-type terminal is configured as a CORESET associated with the search space for the paging monitoring for the first-type terminal.

In an embodiment, a CORESET associated with the search space for the system message monitoring configured for the second-type terminal is configured as a CORESET associated with the search space for the system message monitoring for the first-type terminal.

In an embodiment, a search space for the paging monitoring configured for the second-type terminal is configured as a search space for the paging monitoring for the first-type terminal.

In an embodiment, a search space for the system message monitoring configured for the second-type terminal is configured as a search space for the system message monitoring for the first-type terminal.

In an embodiment, the additional common CORESET configured for the second-type terminal is configured as a CORESET associated with the search space for the RAR monitoring for the first-type terminal.

In an embodiment, the common CORESETO is configured as a CORESET associated with the search space for the RAR monitoring for the first-type terminal.

In an embodiment, the additional common search space configured for the second-type terminal is configured as a search space for the RAR monitoring for the first-type terminal.

In an embodiment, the common search space 0 is configured as a search space for the RAR monitoring for the first-type terminal.

In an embodiment, the additional common CORESET or CORESE0 associated with a RAR search space configured for the second-type terminal may be configured as the CORESET associated with the search space for the RAR monitoring for the first-type terminal, i.e., the two are multiplexed. However, different search spaces may additionally be configured for the RAR monitoring for the first-type terminal. At this time, the network will schedule random access response messages from different types of terminals in different search spaces.

In an embodiment, in a case where the initial BWP configured for the second-type terminal does not include the CORESETO, it means that there is no overlap in bandwidth with the initial BWP of the first-type terminal. At this time, the RAR search space configured for the second-type terminal needs to be separately configured with the additional common CORESET, for example, a commonControlResourceSet-Redcap; or an additional common CORESET with a different additional common CORESET ID on the bandwidth of the initial BWP of the first-type terminal, for example, an additional common CORESET 2. At this time, the network will schedule random access response messages from different types of terminals on different initial BWPs.

In an embodiment, the commonControlResourceSet in a PDCCH-ConfigCommon field needs to be extended for the first-type terminal for configuring an additional (or extra) common CORESET; an ID of the additional common CORESET may be the same as or different from an additional CORESET included in the initial BWP configured for the second-type terminal. For example, the commonControlResourceSet in the PDCCH-ConfigCommon field needs to be extended for the first-type terminal for configuring an additional common CORESET#2 or common CORESET-Redcap for the RAR monitoring. However, monitoring of paging messages, system messages, or the like configured for the first-type terminal may continue to be used for configuring the additional common CORESET for the second-type terminal, for example, an additional common CORESET#1 or CORSETO, and thus confusion can be avoided.

In an embodiment, in a case where the commonControlResourceSet in the PDCCH-ConfigCommon field configured for the second-type terminal is used for configuring an additional common CORESET#1 for the RAR monitoring, the monitoring of paging messages, system messages, or the like configured for the first-type terminal may continue to be used for configuring the common CORESETO for the second-type terminal (assuming that the second-type terminal does not use the additional CORESET), and thus confusion will not occur.

In an embodiment, in a case where the initial BWP configured for the second-type terminal contains the CORESETO, it means that there is an overlap in the bandwidth with the initial BWP of the first-type terminal. At this time, the commonControlResourceSet in the PDCCH-ConfigCommon field configured for the second-type terminal needs to be contained in the CORESETO. As a preferred embodiment, the configuration may be completely the same as that of the second-type terminal. The configuration of the second-type terminal may be completely multiplexed for the system message monitoring and the paging message monitoring; the configuration of the second-type terminal may also be completely multiplexed for the monitoring of a RAR message, or the RAR search space may be separately configured with the additional common CORESET, for example, the commonControlResourceSet or the common CORESET1.

In an embodiment, the common configuration information of the PDCCH for the initial BWP configuration is sent to the first-type terminal; in which the common configuration information of the downlink control channel is used to indicate the predetermined resource for the first-type terminal to perform the predetermined operation; and the predetermined resource includes at least one of: the additional common CORESET; the additional common search space; the common CORESETO; or the common search space 0. In this way, after receiving the common configuration information of the downlink control channel for the initial BWP configuration sent by the access network device, the first-type terminal may perform the predetermined operation based on the predetermined resource indicated by the common configuration information of the downlink control channel, so that the first-type terminal may efficiently and reliably utilize a resource of the BWP, compared with a method of not configuring the common configuration information of the downlink control channel for the initial BWP.

It should be noted that those skilled in the art may understand that the method provided in embodiments of the present invention may be executed alone or together with some methods in embodiments of the present invention or some methods in related technologies.

In order to better understand embodiments of the present invention, the technical solution of the present invention is further described below through three illustrative examples.

### Example 1

In a downlink initial BWP configured for the second-type terminal, a corresponding PDCCH-configCommon configuration is as follows: the CORESETO and/or the search space 0 are configured in the MIB. The CORESETO and/or the search space 0 are used for receiving the SIB1. Here, the CORESETO or the search space 0 may further be used for other system message monitoring, paging message monitoring, RAR monitoring, etc. It should be noted that resources for other system message monitoring, paging message monitoring and RAR monitoring may also be associated with the CORESET 1 and the search space 1 configured in the SIB1.

In the downlink initial BWP configured for the first-type terminal, in a case where the CORESETO is not included, the corresponding PDCCH-configCommon configuration is as follows: the SIB1 is received by using the CORESETO and the search space 0 configured for the second-type terminal (SIB1 monitoring is performed on the CORESETO and the SS0, and the other types of monitoring are not limited); and other system message monitoring, paging monitoring, or the like are performed by using at least one of the CORESETO, the CORESET1, the search space 0 or the search space 1 configured for the second-type terminal. As a preferred embodiment, the configuration for the first-type terminal and the configuration for the second-type terminal may be completely the same.

It should be noted that the search space for the RAR monitoring of the first-type terminal may be different from the search space configured for the second-type terminal, for example, the search space 1, etc., and/or the CORESET for the RAR monitoring may use the additional common CORESET, for example, the CORESET1, etc.

It should be noted that only the search space for the RAR monitoring is within the bandwidth range of the initial BWP configured for the first-type terminal, while the search space or the associated CORESET for the paging monitoring and SI monitoring are both the initial BWP configured for the second-type terminal. At this time, a received message needs to be converted by a transceiver.

### Example 2

In the downlink initial BWP configured for the second-type terminal, the corresponding PDCCH-configCommon configuration is as follows: the CORESETO and/or the search space 0 are configured in the MIB. The CORESETO and/or the search space 0 are used for the system message monitoring; and the CORESET1 or the search space 1 is configured on the initial BWP of the SIB1, and the resources for the paging message monitoring and the RAR monitoring may also be associated with the CORESET1 and the search space 1 configured in the SIB1.

In the downlink initial BWP configured for the first-type terminal, in the case where the CORESETO is not included, the corresponding PDCCH-configCommon configuration is as follows: the monitoring of the system message SIB1 is performed by using the CORESETO and/or the search space 0 configured for the second-type terminal; the paging monitoring is performed by using at least one of the CORESET1 and the search space 1 configured for the second-type terminal; and other system monitoring is performed by using at least one of the CORESET1 and the search space 1 configured for the second-type terminal.

It should be noted that the search space for the RAR monitoring may use the additional common search space, for example, a search space 2, or the like configured on the downlink initial BWP configured for the first-type terminal.

It should be noted that the search space for the RAR monitoring may use the additional common CORESET, for example, a CORESET 2, or the like configured on the downlink initial BWP configured for the first-type terminal.

It should be noted that only the search space for the RAR monitoring is within the bandwidth range of the initial BWP configured for the first-type terminal, while the search space or the associated CORESET for the paging monitoring and the SI monitoring are both the initial BWP configured for the second-type terminal. At this time, a received message needs to be converted by a transceiver.

### Example 3

In the downlink initial BWP configured for the second-type terminal, the corresponding PDCCH-configCommon configuration is as follows: the CORESETO and/or the search space 0 are configured in the MIB. The CORESETO and/or the search space 0 are used for receiving the SIB1. Here, the CORESETO or the search space 0 may also be used for other system message monitoring, paging message monitoring, RAR monitoring, etc. It should be noted that the resources for other system message monitoring, paging message monitoring and RAR monitoring may also be associated with the CORESET1 and the search space 1 configured in the SIB1.

In the downlink initial BWP configured for the first-type terminal, in a case where the CORESETO is included, the corresponding PDCCH-configCommon configuration is as follows: the SIB is received by using the CORESETO and the search space 0 configured for the second-type terminal; and other system message monitoring, paging monitoring, or the like are performed by using at least one of the CORESETO, the CORESET1, the search space 0 or the search space 1 configured for the second-type terminal. As a preferred embodiment, the configuration for the first-type terminal and the configuration for the second-type terminal may be completely the same.

It should be noted that the search space for the RAR monitoring of the first-type terminal may be different from the search space configured for the second-type terminal, for example, the search space 1, or the like, and/or the CORESET for the RAR monitoring may use the additional common CORESET, for example, the CORESET1, or the like (a physical resource location may be the same as or different from that configured for the first-type terminal).

In an embodiment, an identifier of the additional common CORESET is different from or the same as an identifier of the common CORESET configured for the second-type terminal; and/or an identifier of the additional common search space is different from or the same as an identifier of the common search space configured for the second-type terminal.

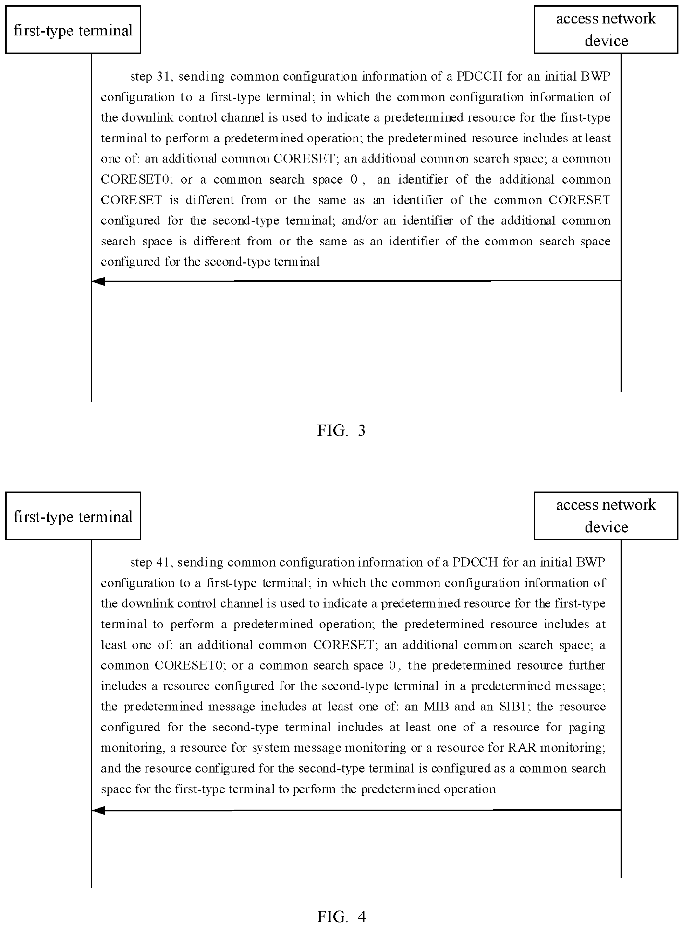

As shown in FIG. 3, the present embodiment provides a method for configuring a resource, performed by an access network device, including a step as follows.

In step 31, common configuration information of a PDCCH for an initial BWP configuration is sent to a first-type terminal; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. An identifier of the additional common CORESET is different from or the same as an identifier of the common CORESET configured for the second-type terminal; and/or an identifier of the additional common search space is different from or the same as an identifier of the common search space configured for the second-type terminal.

It should be noted that those skilled in the art may understand that the method provided in embodiments of the present invention may be executed alone or together with some methods in embodiments of the present invention or some methods in related technologies.

In an embodiment, the bandwidth of the additional common CORESET is not contained in the bandwidth of the CORESETO in response to that the bandwidth of the initial BWP does not contain the bandwidth of the CORESETO.

In an embodiment, the additional common CORESET is configured as a CORESET associated with the common search space for the first-type terminal to perform the predetermined operation; and/or the additional common search space is configured as a common search space for the first-type terminal to perform the predetermined operation; and/or the CORESETO is configured as a CORESET associated with the common search space for the first-type terminal to perform the predetermined operation; and/or the common search space 0 is configured as a common search space for the first-type terminal to perform the predetermined operation.

As shown in FIG. 4, the present embodiment provides a method for configuring a resource, performed by an access network device, including a step as follows.

In step 41, common configuration information of a PDCCH for an initial BWP configuration is sent to a first-type terminal; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. The predetermined resource further includes a resource configured for the second-type terminal in a predetermined message; the predetermined message includes at least one of: an MIB or an SIB 1; the resource configured for the second-type terminal includes at least one of a resource for paging monitoring, a resource for system message monitoring or a resource for RAR monitoring; and the resource configured for the second-type terminal is configured as a common search space for the first-type terminal to perform the predetermined operation.

In an embodiment, the method includes at least one of: a CORESET associated with the search space for the paging monitoring configured for the second-type terminal being configured as a CORESET associated with the search space for the paging monitoring for the first-type terminal; a CORESET associated with the search space for the system message monitoring configured for the second-type terminal being configured as a CORESET associated with the search space for system message monitoring for the first-type terminal; a search space for the paging monitoring configured for the second-type terminal being configured as a search space for the paging monitoring for the first-type terminal; or a search space for the system message monitoring configured for the second-type terminal being configured as a search space for the system message monitoring for the first-type terminal.

In an embodiment, the method includes at least one of: the additional common CORESET being configured as a CORESET associated with the search space for the RAR monitoring for the first-type terminal; the common CORESETO being configured as a CORESET associated with the search space for the RAR monitoring for the first-type terminal; the additional common search space being configured as a search space for the RAR monitoring for the first-type terminal; or the common search space 0 being configured as a search space for the RAR monitoring for the first-type terminal.

It should be noted that those skilled in the art may understand that the method provided in embodiments of the present invention may be executed alone or together with some methods in embodiments of the present invention or some methods in related technologies.

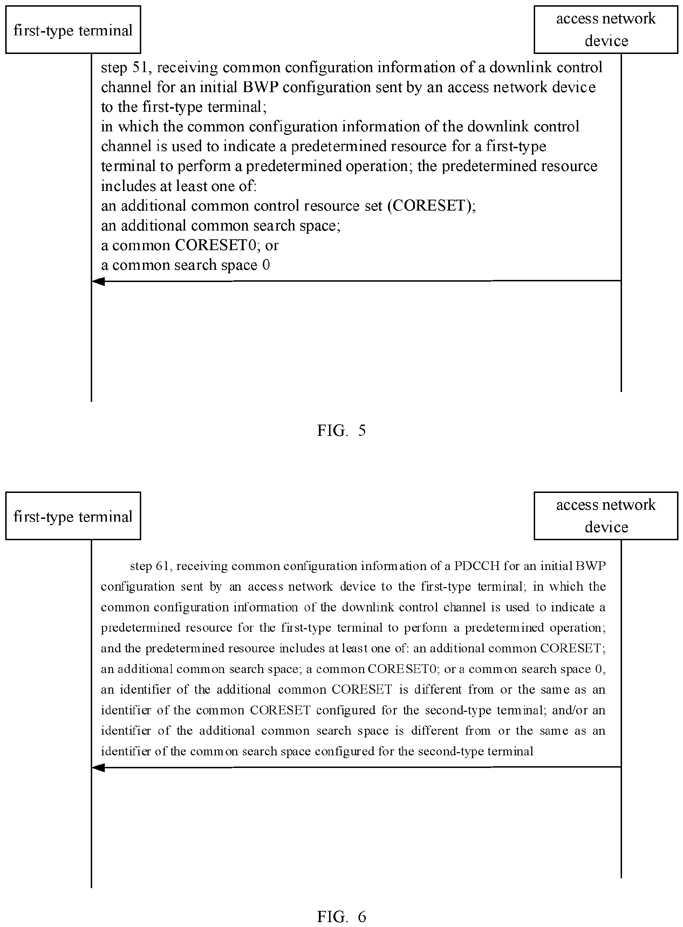

As shown in FIG. 5, the present embodiment provides a method for configuring a resource, performed by a first-type terminal, including a step as follows.

In step 51, common configuration information of a downlink control channel for an initial BWP configuration sent by an access network device to the first-type terminal is received; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0.

Here, the first-type terminal and the second-type terminal according to the present invention may be, but are not limited to, a mobile phone, a wearable device, an in-vehicle terminal, a road side unit (RSU), a smart home terminal, an industrial sensing device, and/or a medical device. The first-type terminal and the second-type terminal are different types of terminals. In an embodiment, the first-type terminal may be a Redcap terminal, and the second-type terminal may be another non-Redcap terminal other than the Redcap terminal.

The access network device according to the present invention may be a base station. Here, the base station may be a base station of various types, for example, a base station in a 5G network or other evolved base stations.

It should be noted that the common configuration information of the PDCCH may be carried in a PDCCH common configuration (PDCCH-configCommon) field or a PDCCH common system information block configuration (PDCCH-configCommonSIB) field of the RedCap-specific initial DL BWP configuration.

It should be noted that the information such as frequency domain resource information of the PDCCH, the number of orthogonal frequency division multiplexing (OFDM) symbols occupied in a time domain and other information are encapsulated in the CORESET; a PDCCH starting OFDM symbol, a monitoring period, the associated CORESET and other information are encapsulated in the search space. Here, the common search space is mainly used during the access and cell switching, for example, for the monitoring related control information, such as the BCCH, paging, RAR, etc.

In an embodiment, the common configuration information of the PDCCH for the initial BWP configuration sent by the access network device to the first-type terminal is received; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. The predetermined operation includes at least one of: the operation of RAR monitoring; the operation of paging monitoring; or the operation of system message monitoring.

In an embodiment, the identifier of the additional common CORESET is different from the identifier of the common CORESET configured for the second-type terminal. It should be noted that the identifier of the additional common CORESET may not be 0.

In an embodiment, the identifier of the additional common search space is different from the identifier of the common search space configured for the second-type terminal. It should be noted that the identifier of the additional common search space may not be 0.

In an embodiment, the identifier of the additional common CORESET is the same as the identifier of the common CORESET configured for the second-type terminal. It should be noted that the identifier of the additional common CORESET may not be 0.

In an embodiment, the identifier of the additional common search space is the same as the identifier of the common search space configured for the second-type terminal. It should be noted that the identifier of the additional common search space may not be 0.

In an embodiment, in the case where the bandwidth of the initial BWP does not contain the bandwidth of the CORSETO, the access network device may configure the additional common CORESET or the additional common search space; in which the bandwidth of the additional common CORESET does not have to be contained in the bandwidth of the CORESETO.

In an embodiment, the access network device may configure the CORESET associated with all or some of the common search spaces for the first-type terminal based on the additional common CORESET. Alternatively, the access network device may configure all or some of the common search spaces for the first-type terminal based on the additional common search space.

It should be noted that the CORESET associated with all the search space may be understood as a CORESET associated with the search space required for the terminal to perform all the predetermined operations, and all the predetermined operations may include the operation of RAR monitoring, the operation of paging monitoring, the operation of system message monitoring and the like, but are not limited to the above-described operations. The CORESET associated with some of the search spaces may be understood as a CORESET associated with the search space required to perform some of the predetermined operations, and the some of the predetermined operations is a part of all the predetermined operations. Similarly, all the search space here may be understood as a search space required for the terminal to perform all the predetermined operations, and all the predetermined operations may include the operation of RAR monitoring, the operation of paging monitoring, the operation of system message monitoring and the like, but are not limited to the above-described operations. The some of the search spaces may be understood as search spaces required for performing some of the predetermined operations, and the some of the predetermined operations is a part of all the predetermined operations.

In an embodiment, the additional common CORESET is configured as a CORESET associated with the common search space for the first-type terminal to perform all the predetermined operations; in which the predetermined operations include at least one of: the operation of RAR monitoring; the operation of paging monitoring; or the operation of system message monitoring.

In an embodiment, the additional common search space is configured as a common search space for the first-type terminal to perform all the predetermined operations; in which the predetermined operations include at least one of: the operation of RAR monitoring; the operation of paging monitoring; or the operation of system message monitoring.

In an embodiment, the common configuration information of the PDCCH for the initial BWP configuration sent by the access network device to the first-type terminal is received; in which the common configuration information of the downlink control channel is used to indicate the predetermined resource for the first-type terminal to perform the predetermined operation; and the predetermined resource includes at least one of: an additional common CORESET; or an additional common search space. The additional common CORESET is configured as a CORESET associated with the common search space for the first-type terminal to perform all the predetermined operations, and/or the additional common search space is configured as a common search space for the first-type terminal to perform all the predetermined operations.

In an embodiment, the common CORESETO is configured as a CORESET associated with the common search space for the first-type terminal to perform all the predetermined operations, in which the predetermined operations include at least one of: the operation of RAR monitoring; the operation of paging monitoring; or the operation of system message monitoring.

In an embodiment, the common CORESETO may be used by the search spaces configured on the initial BWP configured for the first-type terminal and the initial BWP configured for the second-type terminal.

In an embodiment, the common CORESETO may be used by the search spaces configured on the initial BWP configured for the first-type terminal and the initial BWP configured for the second-type terminal. The range of the bandwidth of the initial BWP configured for the first-type terminal does not contain the bandwidth of the common CORESETO.

In an embodiment, the common search space 0 is configured as a common search space for the first-type terminal to perform all the predetermined operations, in which the predetermined operations include at least one of: the operation of RAR monitoring; the operation of paging monitoring; or the operation of system message monitoring.

In an embodiment, the common configuration information of the PDCCH for the initial BWP configuration sent by the access network device to the first-type terminal is received; in which the common configuration information of the downlink control channel is used to indicate the predetermined resource for the first-type terminal to perform the predetermined operation; and the predetermined resource includes at least one of: a common CORESETO; or a common search space 0. The common CORESETO is configured as a CORESET associated with the common search space for the first-type terminal to perform all the predetermined operations, and/or the common search space 0 is configured as a common search space for the first-type terminal to perform all the predetermined operations.

In an embodiment, the common search space 0 may be used by the search spaces configured on the initial BWP configured for the first-type terminal and the initial BWP configured for the second-type terminal.

In an embodiment, the common search space 0 may be used by the search spaces configured on the initial BWP configured for the first-type terminal and the initial BWP configured for the second-type terminal. The range of the bandwidth of the initial BWP configured for the first-type terminal does not contain the bandwidth of the common CORESETO.

In an embodiment, the additional common CORESET is configured as a CORESET associated with the common search space for the first-type terminal to perform the predetermined operation; and/or the additional common search space is configured as a common search space for the first-type terminal to perform the predetermined operation; and/or the CORESETO is configured as a CORESET associated with the common search space for the first-type terminal to perform the predetermined operation; and/or the common search space 0 is configured as a common search space for the first-type terminal to perform the predetermined operation.

In an embodiment, the additional common CORESET is configured as a CORESET associated with the common search space for the first-type terminal to perform some of the predetermined operations; and/or the additional common search space is configured as a common search space for the first-type terminal to perform some of the predetermined operations; and/or the CORESETO is configured as a CORESET associated with the common search space for the first-type terminal to perform some of the predetermined operations; and/or the common search space 0 is configured as a common search space for the first-type terminal to perform some of the predetermined operations. The predetermined operations include at least one of: the operation of RAR monitoring; the operation of paging monitoring; or the operation of system message monitoring.

In an embodiment, the common configuration information of the PDCCH for the initial BWP configuration sent by the access network device to the first-type terminal is received; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. The additional common CORESET is configured as a CORESET associated with the common search space for the first-type terminal to perform some of the predetermined operations; and/or the additional common search space is configured as a common search space for the first-type terminal to perform some of the predetermined operations; and/or the CORESETO is configured as a CORESET associated with the common search space for the first-type terminal to perform some of the predetermined operations; and/or the common search space 0 is configured as a common search space for the first-type terminal to perform some of the predetermined operations.

It should be noted that the CORESETO and the search space 0 may be configured in the MIB, and other CORESETs and/or search spaces identified as non-0 need to be configured in the SIB1. For example, the CORESETO and/or the search space 0 are configured in the SIB1.

In an embodiment, the predetermined resource further includes a resource configured for the second-type terminal in a predetermined message; the predetermined message includes at least one of: an MIB or an SIB1; the resource configured for the second-type terminal includes at least one of a resource for the paging monitoring, a resource for the system message monitoring or a resource for the RAR monitoring; and the resource configured for the second-type terminal is configured as the common search space for the first-type terminal to perform the predetermined operation.

In an embodiment, the CORESETO and/or the search space 0 are configured for the second-type terminal in the MIB; the CORESET x and/or the search space CORESET x are configured for the second-type terminal in the SIB 1, where x is not 0, but may be 1, 2, or the like.

In an embodiment, a CORESET associated with the search space for the paging monitoring configured for the second-type terminal is configured as a CORESET associated with the search space for the paging monitoring for the first-type terminal.

In an embodiment, a CORESET associated with the search space for the system message monitoring configured for the second-type terminal is configured as a CORESET associated with the search space for the system message monitoring for the first-type terminal.

In an embodiment, a search space for the paging monitoring configured for the second-type terminal is configured as a search space for the paging monitoring for the first-type terminal.

In an embodiment, a search space for the system message monitoring configured for the second-type terminal is configured as a search space for the system message monitoring for the first-type terminal.

In an embodiment, the additional common CORESET or the common CORESETO is configured as a CORESET associated with the search space for the RAR monitoring for the first-type terminal.

In an embodiment, the common CORESETO is configured as a CORESET associated with the search space for the RAR monitoring for the first-type terminal.

In an embodiment, the additional common search space is configured as a search space for the RAR monitoring for the first-type terminal.

In an embodiment, the common search space 0 is configured as a search space for the RAR monitoring for the first-type terminal.

In an embodiment, the additional common CORESET or CORESE0 associated with the RAR search space configured for the second-type terminal may be configured as the CORESET associated with the search space for the RAR monitoring for the first-type terminal, i.e., the two are multiplexed. However, different search spaces may additionally be configured for the RAR monitoring for the first-type terminal. At this time, the network will schedule the random access response messages from different types of terminals in different search spaces.

In an embodiment, in the case where the initial BWP configured for the second-type terminal does not include the CORESETO, it means that there is no overlap in the bandwidth with the initial BWP of the first-type terminal. At this time, the RAR search space configured for the second-type terminal needs to be separately configured with an additional common CORESET, for example, the commonControlResourceSet-Redcap; or an additional common CORESET with a different additional common CORESET ID on the bandwidth of the initial BWP of the first-type terminal, for example, the additional common CORESET 2. At this time, the network will schedule random access response messages from different types of terminals on different initial BWPs.

In an embodiment, the commonControlResourceSet in the PDCCH-ConfigCommon field needs to be extended for the first-type terminal for configuring the additional (or extra) common CORESET; the ID of the additional common CORESET may be the same as or different from the additional CORESET included in the initial BWP configured for the second-type terminal. For example, the commonControlResourceSet in the PDCCH-ConfigCommon field needs to be extended for the first-type terminal for configuring the additional common CORESET#2 or the common CORESET-Redcap for the RAR monitoring. However, the monitoring of paging messages, system messages, or the like configured for the first-type terminal may continue to be used for configuring the additional common CORESET for the second-type terminal, for example, the additional common CORESET#1 or CORSETO, and thus confusion can be avoided.

In an embodiment, in the case where the commonControlResourceSet in the PDCCH-ConfigCommon field configured for the second-type terminal is used for configuring an additional common CORESET#1 for the RAR monitoring, the monitoring of paging messages, system messages, or the like configured for the first-type terminal may continue to be used for configuring the common CORESETO for the second-type terminal (assuming that the second-type terminal does not use the additional CORESET), and thus confusion will not occur.

In an embodiment, in the case where the initial BWP configured for the second-type terminal includes the CORESETO, it means that there is the overlap in the bandwidth with the initial BWP of the first-type terminal. At this time, the commonControlResourceSet in the PDCCH-ConfigCommon field configured for the second-type terminal needs to be included in the CORESETO. As a preferred embodiment, the configuration may be completely the same as that of the second-type terminal. The configuration of the second-type terminal may be completely multiplexed for the system message monitoring and the paging message monitoring; the configuration of the second-type terminal may also be completely multiplexed for the monitoring of a RAR message, or the RAR search space may be separately configured with the additional common CORESET, for example, the commonControlResourceSet or the common CORESET1.

It should be noted that those skilled in the art may understand that the method provided in embodiments of the present invention may be executed alone or together with some methods in embodiments of the present invention or some methods in related technologies.

In an embodiment, the identifier of the additional common CORESET is different from or the same as the identifier of the common CORESET configured for the second-type terminal; and/or the identifier of the additional common search space is different from or the same as the identifier of the common search space configured for the second-type terminal.

As shown in FIG. 6, the present embodiment provides a method for configuring a resource, performed by a first-type terminal, including a step as follows.

In step 61, common configuration information of a PDCCH for an initial BWP configuration sent by an access network device to the first-type terminal is received; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. An identifier of the additional common CORESET is different from or the same as an identifier of the common CORESET configured for the second-type terminal; and/or an identifier of the additional common search space is different from or the same as an identifier of the common search space configured for the second-type terminal.

It should be noted that those skilled in the art may understand that the method provided in embodiments of the present invention may be executed alone or together with some methods in embodiments of the present invention or some methods in related technologies.

In an embodiment, the bandwidth of the additional common CORESET is not contained in the bandwidth of the CORESETO in response to that the bandwidth of the initial BWP does not contain the bandwidth of the CORESETO.

In an embodiment, the additional common CORESET is configured as a CORESET associated with the common search space for the first-type terminal to perform the predetermined operation; and/or the additional common search space is configured as a common search space for the first-type terminal to perform the predetermined operation; and/or the CORESETO is configured as a CORESET associated with the common search space for the first-type terminal to perform the predetermined operation; and/or the common search space 0 is configured as a common search space for the first-type terminal to perform the predetermined operation.

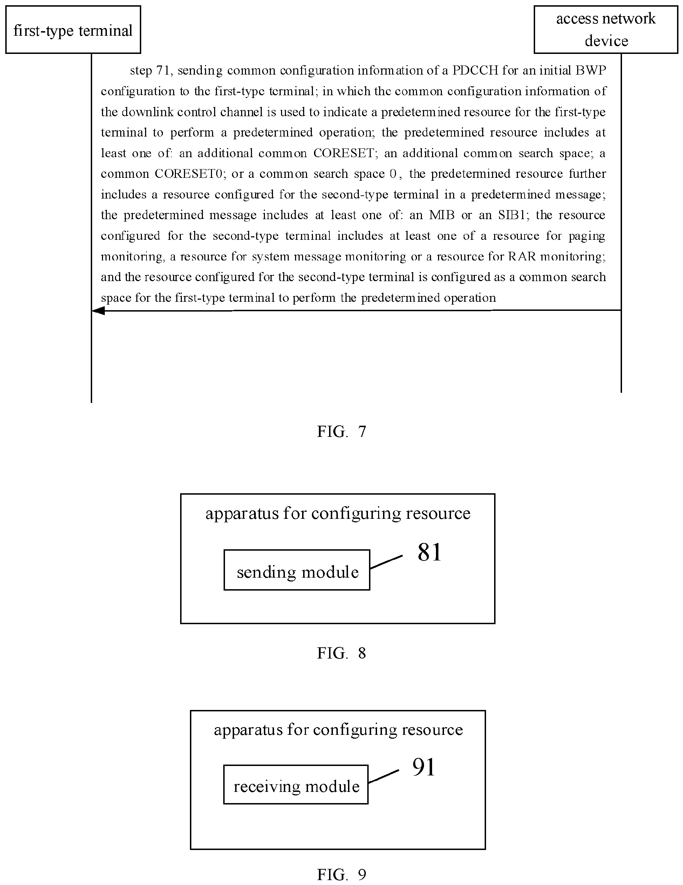

As shown in FIG. 7, the present embodiment provides a method for configuring a resource, performed by a first-type terminal, including a step as follows.

In step 71, common configuration information of a PDCCH for an initial BWP configuration is sent to the first-type terminal; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0. The predetermined resource further includes a resource configured for the second-type terminal in a predetermined message; the predetermined message includes at least one of: an MIB or an SIB 1; the resource configured for the second-type terminal includes at least one of a resource for paging monitoring, a resource for system message monitoring or a resource for RAR monitoring; and the resource configured for the second-type terminal is configured as a common search space for the first-type terminal to perform the predetermined operation.

In an embodiment, the method includes at least one of: a CORESET associated with the search space for the paging monitoring configured for the second-type terminal being configured as a CORESET associated with the search space for the paging monitoring for the first-type terminal; a CORESET associated with the search space for the system message monitoring configured for the second-type terminal being configured as a CORESET associated with the search space for system message monitoring for the first-type terminal; a search space for the paging monitoring configured for the second-type terminal being configured as a search space for the paging monitoring for the first-type terminal; or a search space for the system message monitoring configured for the second-type terminal being configured as a search space for the system message monitoring for the first-type terminal.

In an embodiment, the method includes at least one of: the additional common CORESET being configured as a CORESET associated with the search space for the RAR monitoring for the first-type terminal; the common CORESETO being configured as a CORESET associated with the search space for the RAR monitoring for the first-type terminal; the additional common search space being configured as a search space for the RAR monitoring for the first-type terminal; or the common search space 0 being configured as a search space for the RAR monitoring for the first-type terminal.

It should be noted that those skilled in the art may understand that the method provided in embodiments of the present invention may be executed alone or together with some methods in embodiments of the present invention or some methods in related technologies.

As shown in FIG. 8, the present embodiment provides an apparatus for configuring a resource, including: a sending module 81 configured to send common configuration information of a downlink control channel for a BWP configuration; in which the common configuration information of the downlink control channel is used to indicate a predetermined resource for a first-type terminal to perform a predetermined operation; and the predetermined resource includes at least one of: an additional common CORESET; an additional common search space; a common CORESETO; or a common search space 0.

It should be noted that those skilled in the art may understand that the method provided in embodiments of the present invention may be executed alone or together with some methods in embodiments of the present invention or some methods in related technologies.

As shown in FIG. 9, the present embodiment provides an apparatus for configuring a resource, including: a receiving module 91 configured to receive common configuration information of a downlink control channel for an initial BWP configuration sent by an access network device to a first-type terminal; in which the common configuration information of the downlink control channel is used to indicate a predetermined resource for the first-type terminal to perform a predetermined operation; and the predetermined resource includes at least one of: an additional common CORESET; an additional common search space; a common CORESETO; or a common search space 0.

It should be noted that those skilled in the art may understand that the method provided in embodiments of the present invention may be executed alone or together with some methods in embodiments of the present invention or some methods in related technologies.

Embodiments of the present invention provide a communication device, including: a processor; and a memory configured to store processor-executable instructions; in which the processor is configured to execute executable instructions to implement the method applied to any embodiment of the present invention.

The processor may include various types of storage media that are non-transitory computer storage media capable of continuing to memorize information stored thereon after the communication device is powered off.

The processor may be coupled to the memory via a bus or the like for reading executable programs stored on the memory.

Embodiments of the present invention further provide a computer storage medium having stored therein computer-executable instructions that, when executed by a processor, cause the method in any embodiment of the present invention to be implemented.

With respect to the apparatuses in the above embodiments, the specific manners for performing operations for individual modules therein have been described in detail in the embodiments regarding the method, which will not be elaborated herein.

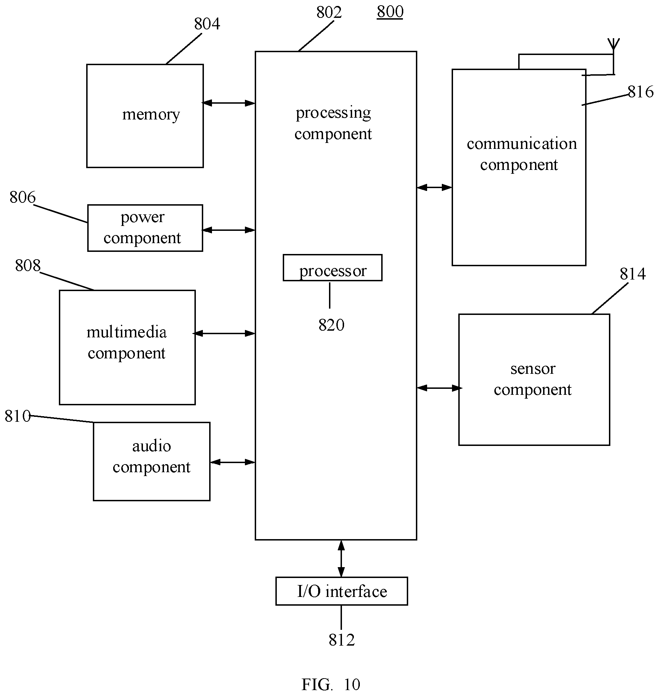

As shown in FIG. 10, an embodiment of the present invention provides a structure of the terminal.

Referring to the terminal 800 shown in FIG. 10, the present embodiment provides a terminal 800, which is specifically a mobile phone, a computer, a digital broadcast terminal, a messaging device, a game console, a tablet device, a medical device, a fitness device, a personal digital assistant, or the like.

Referring to FIG. 10, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or some of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, a button and the like. The button may include, but is not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the terminal 800 and other devices. The terminal 800 can access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In embodiments, there is further provided a non-transitory computer-readable storage medium (such as the memory 804) including instructions that, when executed by the processor 820 of the terminal 800, to perform any of the above-described methods. For example, the non-transitory computer-readable storage medium may be a ROM, a RAM, a CD-ROM, a magnetic tape, a floppy disc, an optical data storage device, and the like.

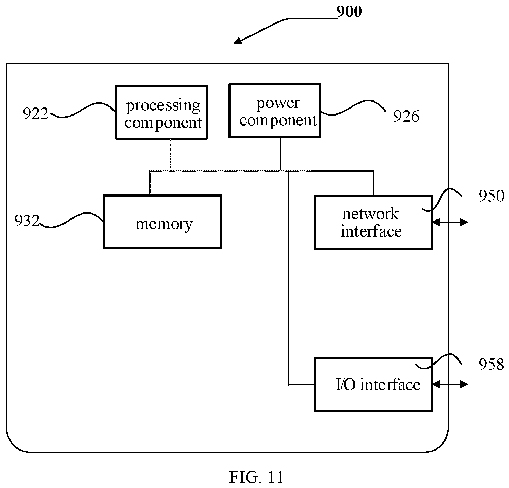

As shown in FIG. 11, an embodiment of the present invention illustrates a structure of the base station. For example, the base station 900 may be provided as a network-side device. Referring to FIG. 11, the base station 900 includes a processing component 922 and a memory resource represented by a memory 932. The processing component 922 may further include one or more processors. The memory resource is configured to store instructions executable by the processing component 922, such as an application program. The application program stored in the memory 932 may include one or more modules each corresponding to a set of instructions. In addition, the processing component 922 is configured to execute the instructions to perform the above method, i.e. any of the above-described methods performed by the base station.

The base station 900 further includes a power component 926 configured to perform a power management on the base station 900, a wired or wireless network interface 950 configured to connect the base station 900 to the network, and an input/output (I/O) interface 958. The base station 900 may operate an operating system stored in the memory 932, such as Windows Server TM, Mac OS XTM, Unix TM, Linux TM, Free BSDTM, or the like.

Other embodiments of the present invention will be apparent to those skilled in the art from consideration of the specification and practice of the present invention disclosed here. The present invention is intended to cover any variations, uses, or adaptations of the present invention following the general principles thereof and including common knowledge or conventional technical means known in the art but not disclosed in the present invention. The specification and examples should be considered as exemplary only, with a true scope and spirit of the present invention being indicated by the following claims.

It will be appreciated that the present invention is not limited to the exact construction that has been described above and illustrated in the accompanying drawings, and that various modifications and changes can be made without departing from the scope thereof. The scope of the present invention is only limited by the appended claims.

## Claims

1. A method for configuring a resource, performed by an access network device, comprising:
sending common configuration information of a downlink control channel for an initial bandwidth part (BWP) configuration;
wherein the common configuration information of the downlink control channel is used to indicate a predetermined resource for a first-type terminal to perform a predetermined operation; the predetermined resource comprises at least one of:
an additional common control resource set (CORESET);
an additional common search space;
a common CORESETO; or
a common search space 0.

2. The method of claim 1, wherein the predetermined operation comprises at least one of:
an operation of random access response (RAR) monitoring;
an operation of paging monitoring; or
an operation of system message monitoring.

3. The method of claim 1, wherein an identifier of the additional common CORESET is different from or the same as an identifier of a common CORESET configured for a second-type terminal; and/or an identifier of the additional common search space is different from or the same as an identifier of a common search space configured for the second-type terminal.

4. The method of claim 1, wherein a bandwidth of the additional common CORESET is not contained in a bandwidth of the CORESETO in response to that a bandwidth of an initial BWP does not contain the bandwidth of the CORESETO.

5. The method of claim 1, comprising at least one of:
the additional common CORESET being configured as a CORESET associated with a common search space for the first-type terminal to perform the predetermined operation;
the additional common search space being configured as a common search space for the first-type terminal to perform the predetermined operation;
the CORESETO being configured as a CORESET associated with a common search space for the first-type terminal to perform the predetermined operation; or
the common search space 0 being configured as a common search space for the first-type terminal to perform the predetermined operation.

6. The method of claim 5, wherein the predetermined resource further comprises a resource configured for a second-type terminal in a predetermined message; the predetermined message comprises at least one of: a master information block (MIB) or a system information block 1 (SIB1); the resource configured for the second-type terminal comprises at least one of a resource for paging monitoring, a resource for system message monitoring or a resource for RAR monitoring; and the resource configured for the second-type terminal is configured as the common search space for the first-type terminal to perform the predetermined operation.

7. The method of claim 6, comprising at least one of:
a CORESET associated with a search space for paging monitoring configured for the second-type terminal being configured as a CORESET associated with a search space for paging monitoring for the first-type terminal;
a CORESET associated with a search space for system message monitoring configured for the second-type terminal being configured as a CORESET associated with a search space for system message monitoring for the first-type terminal;
a search space for paging monitoring configured for the second-type terminal being configured as a search space for paging monitoring for the first-type terminal; or
a search space for system message monitoring configured for the second-type terminal being configured as a search space for system message monitoring for the first-type terminal.

8. The method of claim 7, comprising at least one of:
the additional common CORESET being configured as a CORESET associated with a search space for RAR monitoring for the first-type terminal;
the common CORESETO being configured as a CORESET associated with a search space for RAR monitoring for the first-type terminal;
the additional common search space being configured as a search space for RAR monitoring for the first-type terminal; or
the common search space 0 being configured as a search space for RAR monitoring for the first-type terminal.

9. A method for configuring a resource, performed by a first-type terminal, comprising:
receiving common configuration information of a downlink control channel configured for an initial bandwidth part (BWP);
wherein the common configuration information of the downlink control channel is used to indicate a predetermined resource for the first-type terminal to perform a predetermined operation; the predetermined resource comprises at least one of:
an additional common control resource set (CORESET);
an additional common search space;
a common CORESETO; or
a common search space 0.

10. The method of claim 9, wherein the predetermined operation comprises at least one of:
an operation of random access response (RAR) monitoring;
an operation of paging monitoring; or
an operation of system message monitoring.

11. The method of claim 9, wherein an identifier of the additional common CORESET is different from or the same as an identifier of a common CORESET configured for a second-type terminal; and/or an identifier of the additional common search space is different from or the same as an identifier of a common search space configured for the second-type terminal.

12. The method of claim 9, wherein a bandwidth of the additional common CORESET is not contained in a bandwidth of the CORESETO in response to that a bandwidth of an initial BWP does not contain the bandwidth of the CORESETO.

13. The method of claim 9, comprising at least one of:
the additional common CORESET being configured as a CORESET associated with a common search space for the first-type terminal to perform the predetermined operation;
the additional common search space being configured as a common search space for the first-type terminal to perform the predetermined operation;
the CORESETO being configured as a CORESET associated with a common search space for the first-type terminal to perform the predetermined operation; or
the common search space 0 being configured as a common search space for the first-type terminal to perform the predetermined operation.

14. The method of claim 13, wherein the predetermined resource further comprises a resource configured for a second-type terminal in a predetermined message; the predetermined message comprises at least one of: a master information block (MIB) or a system information block 1 (SIB1); the resource configured for the second-type terminal comprises at least one of a resource for paging monitoring, a resource for system message monitoring or a resource for RAR monitoring; and the resource configured for the second-type terminal is configured as the common search space for the first-type terminal to perform the predetermined operation.

15. The method of claim 14, comprising at least one of:
a CORESET associated with a search space for paging monitoring configured for the second-type terminal being configured as a CORESET associated with a search space for paging monitoring for the first-type terminal;
a CORESET associated with a search space for system message monitoring configured for the second-type terminal being configured as a CORESET associated with a search space for system message monitoring for the first-type terminal;
a search space for paging monitoring configured for the second-type terminal being configured as a search space for paging monitoring for the first-type terminal; or
a search space for system message monitoring configured for the second-type terminal being configured as a search space for system message monitoring for the first-type terminal.

16. The method of claim 15, comprising at least one of:
the additional common CORESET being configured as a CORESET associated with a search space for RAR monitoring for the first-type terminal;
the common CORESETO being configured as a CORESET associated with a search space for RAR monitoring for the first-type terminal;
the additional common search space being configured as a search space for RAR monitoring for the first-type terminal; or
the common search space 0 being configured as a search space for RAR monitoring for the first-type terminal.

17. An apparatus for configuring a resource, comprising:
a sending module configured to send common configuration information of a downlink control channel configured for an initial bandwidth part (BWP);
wherein the common configuration information of the downlink control channel is used to indicate a predetermined resource for a first-type terminal to perform a predetermined operation; the predetermined resource comprises at least one of:
an additional common control resource set (CORESET);
an additional common search space;
a common CORESETO; or
a common search space 0.

18. An apparatus for configuring a resource, comprising:
a receiving module configured to receive common configuration information of a downlink control channel configured for an initial bandwidth part (BWP);
wherein the common configuration information of the downlink control channel is used to indicate a predetermined resource for a first-type terminal to perform a predetermined operation; the predetermined resource comprises at least one of:
an additional common control resource set (CORESET);
an additional common search space;
a common CORESETO; or
a common search space 0.

19. A communication device, comprising:
a memory; and
a processor coupled to the memory, and configured to execute computer-executable instructions stored on the memory to cause the method of any one of claims 1 to 8 or any one of claims 9 to 16 to be implemented.

20. A computer storage medium having stored therein computer-executable instructions that, when executed by a processor, cause the method of any one of claims 1 to 8 or any one of 9 to 16 to be implemented.
